# EUROPEAN PATENT APPLICATION

(11) **EP 2 637 172 A1**
(43) Date of publication of application: **11.09.2013**
(21) Application number: 13158053.2
(22) Date of filing: 06.03.2013
(51) Int. Cl.: G11B 27/034, G11B 27/34, G11B 27/10

(54) **Video editing apparatus and method for guiding video feature information**

(30) Priority: 07.03.2012 KR 20120023555
(71) Applicant: Samsung Electronics Co., Ltd, Gyeonggi-do 443-742 (KR)
(72) Inventor: Kim, Chang-Han, 443-742 Gyeonggi-do (KR); Cho, Sung-Dae, 443-742 Gyeonggi-do (KR)
(74) Representative: Birchenough, Lewis

(57) **Abstract**

A video editing apparatus and method for guiding video feature information are provided. To this end, in video editing, video contents are analyzed to detect at least one video feature information, and video contents sections in which the at least one video feature information is detected are displayed together on an editing screen, thereby providing a video editing guide to a user.

## Description

### BACKGROUND OF THE INVENTION

### 1. Field of the Invention

The present invention generally relates to a video editing apparatus and method, and more particularly, to a video editing apparatus and method for extracting at least one video feature information from video and guiding the extracted at least one video feature information.

### 2. Description of the Related Art

Generally, when a video editing function is executed to edit video, on a video editing screen, video data is played during a total play time to analyze video contents selected for editing. The played video data is displayed or a thumbnail sampled at predetermined time intervals is displayed.

More specifically, the video editing screen includes a preview region for allowing preview of the video data, a timeline region for sequentially disposing and displaying video and audio clips according to time information of the video data, and an editing function region for displaying at least one editing function for editing the video.

Once a user selects video data to be edited, the selected video data is displayed on the timeline region of the video editing screen, and the video is edited with various editing techniques according to user input.

As such, conventionally, the video data selected by the user is displayed on the timeline region of the editing screen, and the user checks a video frame corresponding to particular time information on the preview region to edit the video by using various editing techniques.

However, to analyze the video data for video data editing, the entire video data needs to be played and the user needs to view the video for a long time.

Moreover, the user, although viewing the entire video data, may have difficulty in remembering which information is included in a video frame and which time information of the video data the video frame corresponds to.

Furthermore, even if the user recognizes displayed thumbnail data, because the thumbnail data does not include all the information of the video data, it may take a long time for the user to locate a scene the user desires to edit or a scene including a particular voice.

### SUMMARY OF THE INVENTION

Accordingly, the present invention has been made to address at least the problems and disadvantages described above and to provide at least the advantages described below. Accordingly, an aspect of the present invention provides a video editing apparatus and method for guiding a video section including video feature information in which a user is interested in a video editing operation.

According to an aspect of the present invention, there is provided a video editing apparatus for guiding video feature information, the video editing apparatus including a feature information determiner for determining video sections including at least one video feature information in video data, a time information detector for detecting time information corresponding to the determined video sections, a display unit for displaying the video data, and a controller for controlling the feature information determiner to determine the video sections including the video feature information in response to a video editing request, the time information detector to detect the time information corresponding to the determined video sections, and displaying information about the determined video sections on the display unit by using the detected time information.

According to another aspect of the present invention, there is provided a video editing method for guiding video feature information in a video editing apparatus, the video editing method including determining video sections including at least one video feature information in video data in response to a video editing request, detecting time information corresponding to the determined video sections, displaying the video data, and displaying information about the determined video sections on a display unit by using the detected time information.

### BRIEF DESCRIPTION OF THE DRAWINGS

The above and other features and advantages of embodiments of the present invention will be more apparent from the following detailed description taken in conjunction with the accompanying drawings, in which:
FIG. 1 is a block diagram of a video editing apparatus according to an embodiment of the present invention;
FIG. 2 is a block diagram of a feature information determiner according to an embodiment of the present invention;
FIG. 3 is a flowchart illustrating a process for guiding a video section in which feature information is detected by a video editing apparatus according to an embodiment of the present invention; and
FIG. 4 is a diagram for describing a video editing screen according to an embodiment of the present invention.

### DETAILED DESCRIPTION OF THE EMBODIMENTS OF THE

### PRESENT INVENTION

Hereinafter, embodiments of the present invention will be described with reference to the accompanying drawings. A detailed description of known functions and configurations will be omitted when it may unnecessarily obscure the subject matter of the present invention.

The present invention analyzes video contents in video editing to detect at least one video feature information, and displays information about a video contents section in which the at least one video feature information is detected, together on an editing screen, providing a guide for video editing to a user.

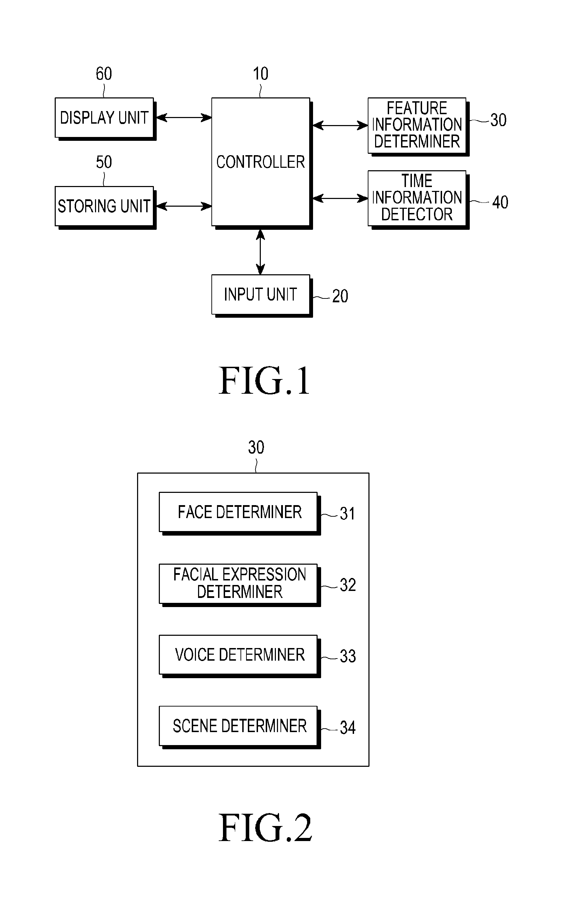

FIG. 1 is a block diagram of a video editing apparatus according to an embodiment of the present invention.

Referring to FIG. 1, the video editing apparatus includes a controller 10, an input unit 20, a feature information determiner 30, a time information detector 40, a storing unit 50, and a display unit 60.

The controller 10 controls an overall operation of the video editing apparatus, and in particular, displays an editing screen for performing a video editing function upon receiving a request for performing the video editing function from a user. Herein, the editing screen refers to a screen configured to include at least one editing function used for video editing.

If video selection for editing is input from the user, the controller 10 analyzes each video frame of selected video data and determines, through the feature information determiner 30, a video section including at least one video frame in which at least one video feature information is detected. Herein, the video feature information includes feature information such as a face, a facial expression, a voice, a scene change, or the like which may be detected from a video frame. More specifically, the controller 10 determines in each image frame, through the feature information determiner 30, a video frame in which video feature information such as a face, a facial expression, a voice, a scene change, or the like is detected. For example, the controller 10 may determine, through the feature information determiner 30, an image frame including a face, an image frame including a facial expression such as a smile, crying, a frown, a closed eye, an image frame including a human voice, and an image frame including a scene change.

The controller 10 detects, through the time information detector 40, time information regarding the video section including the at least one video frame in which the video feature information is detected. For example, the controller 10 detects, through the time information detector 40, time information of a video frame in which face detection starts and time information of a video frame in which a face is detected last. In an embodiment of the present invention, the time information regarding the video section is detected by the time information detector 40, but in another embodiment, numbers sequentially assigned to video frames of video data may be detected.

The controller 10 displays the video data in a timeline corresponding to respective video feature information on the video editing screen, and marks the video section in which the video feature information is detected in a way to distinguish the video section by using the detected time information. The timeline is an editing space in which video clips or audio clips are sequentially disposed, and includes layers and frames, in which through coupling of the layers, an image or an audio of the screen may be disposed. The timeline may successively show frames by adjusting a position or size of an object, or an attribute of an image, and related components are registered on different layers to operate, thereby enabling editing and management of a corresponding component.

For example, the controller 10 may mark information about a video section in which a face is detected with a particular color in a timeline, thereby guiding the user about the video section in which the face is detected in the video. Herein, the information about the video section includes at least one of position information, time information, and frame number of the video section.

The input unit 20 transmits input data corresponding to at least one input to the controller 10. For example, if there is an input for video selection, the input unit 20 transmits input data corresponding to video selection to the controller 10.

The feature information determiner 30 determines, video frame-by-video frame of video data, a video section including a video frame in which at least one video feature information is detected, as will be described in detail with reference to FIG. 2.

FIG. 2 is a block diagram of the feature information determiner 30 according to an embodiment of the present invention.

The feature information determiner 30 according to the present invention includes a face determiner 31, a facial expression determiner 32, a voice determiner 33, and a scene determiner 34.

The face determiner 31 determines, video frame-by-video frame of video data, a video frame in which a face is detected. More specifically, the face determiner 31 searches for a position of a face in each video frame and senses the found position of the face as a face region to determine at least one video frame in which the face region is detected. Herein, the face determiner 31 performs a face detection operation by using a general face detection method such as a face extraction technique using contour, skin color, texture, template, or the like. For example, the face determiner 31 performs face learning while scanning multiple face images, and detects a face from an input image based on the face learning, thereby determining a video frame in which a face is detected.

The facial expression determiner 32 determines, video frame-by-video frame of video data, a video frame in which a facial expression is detected, such that the facial expression determiner 32 determines a video frame in which various facial expressions such as a smile, crying, frowning, and an angry expression are detected, or a video frame in which a preset facial expression is detected. In particular, the facial expression determiner 32 generates a database of facial expressions of at least one type, performs learning with respect to the facial expressions to recognize a facial expression, and determines a video frame in which the recognized facial expression is detected.

The voice determiner 33 identifies the existence of voice in audio data of the video, detects audio data in which the voice exists, and then determines a video frame corresponding to the detected audio data. For example, in the case of a human voice, the voice determiner 33 detects, from audio data, a voice section in which the human voice exists, and determines a video frame corresponding to the detected voice section.

The scene determiner 34 determines, video frame-by-video frame of video data, a video frame in which a scene change is detected. More specifically, the scene determiner 34 extracts pixel values of respective pixels of each video frame to calculate an average deviation thereof, and determines a video frame in which the calculated average deviation is less than a preset threshold value as a video frame in which a scene change is detected. The scene determiner 34 analyzes a color histogram for each video frame and determines a video frame that has a change value of a color histogram that is greater than a threshold value among the analyzed color histograms as a video frame in which a scene change is detected.

Thus, the feature information determiner 30 determines the at least one video frame as video sections in which respective video feature information is detected.

The time information detector 40 detects time information corresponding to the at least one video frame determined by the feature information determiner 30. More specifically, the time information detector 40 detects time information corresponding to a feature information detection section which ranges from a video start frame in which feature information detection starts to a video end frame in which the feature information detection ends among the video frames of the video data. For example, the time information may include information about a time of the video start frame and information about a time of the video end frame.

The storing unit 50 stores data used in the video editing apparatus, particularly, at least one video data and information about a video section of video data in which feature information is detected. The information about the video section may include at least one of position information, time information, and frame number information of the video section. The storing unit 50 also stores time information corresponding to a video frame in which feature information is detected.

The display unit 60 displays a screen configured for video editing, displays selected video data in a timeline region of a video editing screen, and marks feature information in a corresponding timeline in such a way that information about a detected video section is distinguished by using time information corresponding to at least one video frame in which feature information is detected. The display unit 60 may mark information about a video section in which feature information is detected with different colors for different video feature information in corresponding timelines.

As such, the present invention marks information about a video section including video feature information which the user is interested in with a particular color in video editing, allowing the user to conveniently edit the video.

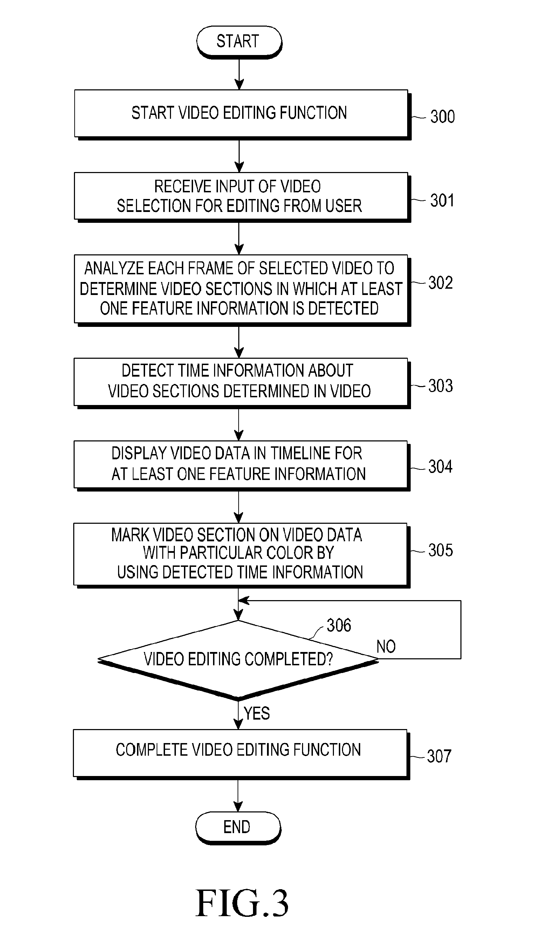

FIG. 3 is a flowchart illustrating a process for guiding a video section in which feature information is detected in the video editing apparatus according to an embodiment of the present invention.

In step 300, the controller 10 starts a video editing function in response to a request for starting the video editing function.

In step 301, the controller 10 receives input of video selection for editing from the user. For example, the controller 10, upon starting the video editing function, displays a list of at least one editable video on the display unit 60, and upon receiving input of selection of particular video from the user, performs an operation for displaying the selected video in a timeline region of an editing screen.

In step 302, the controller 10 controls the feature information determiner 30 to analyze each video frame of the selected video and determine a video frame in which at least one video feature information is detected. More specifically, the controller 10 controls the feature information determiner 30 to analyze at least one video frame of video data and determine a video frame in which particular information such as a face, a facial expression, a voice, a scene change, or the like is included. For example, the feature information determiner 30 determines, among the at least one video frame, a video frame in which a face is detected or a video frame in which a facial expression is detected.

In step 303, the controller 10 detects time information about a video section determined in the video data through the time information detector 40. In other words, the controller 10 detects time information about a feature information detection section including a video frame in which at least one video feature information is detected in the video data. That is, the controller 10 controls the time information detector 40 to detect time information about a feature information detection section including at least one video frame in which respective video feature information is detected.

In step 304, the controller 10 displays video data in a timeline for each of at least one video feature information through the display unit 60. For example, the controller 10 displays four video data in corresponding timelines for four feature information such as a face, a facial expression, a voice, and a scene change.

In step 305, the controller 10 marks information about each video section in which each video feature information is detected with a particular color by using the detected time information through the display unit 60. For example, the controller 10 may mark information about a video section in which a face is detected on video data displayed in a timeline corresponding to face feature information with a particular color such as yellow through the display unit 60. In other words, the controller 10 may mark, for each feature information, information about video sections with different colors.

In step 306, the controller 10 determines whether video editing is completed, and if so, the controller 10 goes to step 307. If not, the controller 10 continuously determines whether video editing is completed in step 306.

In step 307, the controller 10 completes the video editing function and terminates a process for guiding video feature information for video editing.

As such, the present invention marks information about a video section including video feature information which the user is interested in with a particular color in video editing, allowing the user to conveniently edit the video.

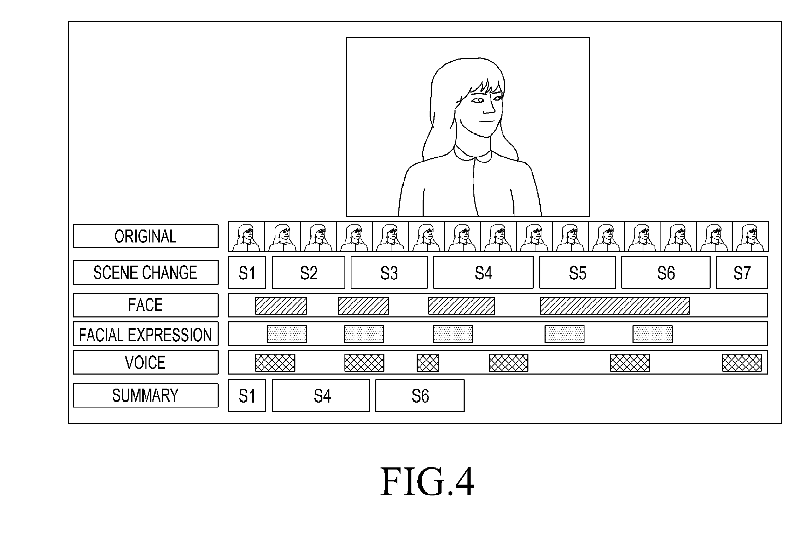

FIG. 4 is a diagram for describing a video editing screen according to an embodiment of the present invention.

In an embodiment of the preset invention, video data is displayed in a timeline corresponding to video feature information such as a face, a facial expression, a voice, or a scene change, but such video feature information may further include other various feature information. The video feature information may be preset in the apparatus or the user may select video feature information which the user desires to guide for video editing.

The video editing screen shown in FIG. 4 according to an embodiment of the present invention includes a video preview region in which video data may be previewed, an original data timeline for displaying original video data, respective time lines corresponding to a face, a facial expression, a voice, and a scene change, and a summary timeline for selecting and displaying respective scene change data divided by each scene change.

As shown in FIG. 4, the controller 10 marks video data in respective timelines corresponding to video feature information such as a face, a facial expression, a voice, and a scene change, and displays information about a video section in which a face is detected, a video section in which a facial expression is detected, a video section in which a voice is detected, and a video section in which a scene change is detected with a plurality of colors. Thus, the user may be guided about which portion in the video the video section in which, for example, the face is detected corresponds to.

In this way, in video editing, by marking a video section including video feature information the user is interested in, the user may conveniently edit the video.

It can be seen that the embodiments of the present invention can be implemented with hardware, software, or a combination of hardware and software. Such arbitrary software may be stored, whether or not erasable or re-recordable, in a volatile or non-volatile storage such as a Read-Only Memory (ROM), a memory such as a Random Access Memory (RAM), a memory chip, a device, or an integrated circuit; and an optically or magnetically recordable and machine (e.g., computer)-readable storage medium such as a Compact Disc (CD), a Digital Versatile Disk (DVD), a magnetic disk, or a magnetic tape. It can be seen that the video editing method for guiding video feature information according to the present invention may be implemented by a computer or a portable terminal which includes a controller and a memory, and the memory is an example of a machine-readable storage medium which is suitable for storing a program or programs including instructions for implementing the embodiment of the present invention. Therefore, the present invention includes a program including codes for implementing an apparatus or method claimed in an arbitrary claim and a machine-readable storage medium for storing such a program. The program may be electronically transferred through an arbitrary medium such as a communication signal delivered through a wired or wireless connection, and the present invention properly includes equivalents thereof.

The video editing apparatus may receive and store the program from a program providing device connected in a wired or wireless manner. The program providing device may include a memory for storing a program including instructions for instructing the video editing apparatus to execute a preset video editing method, information necessary for the video editing method, a communication unit for performing wired or wireless communication with the video editing apparatus, and a controller for transmitting a corresponding program to the video editing apparatus at the request of the video editing apparatus or automatically.

As is apparent from the foregoing description, video data is analyzed and a video section including at least one video feature is guided, allowing a user to easily play a desired video portion and also use a guided portion for video editing.

Moreover, by providing a memo or summary function with respect to a video section including video feature information the user desires, the user may easily locate a meaningful portion in video data.

While the present invention has been particularly shown and described with reference to a certain embodiment thereof, various modifications or changes can be made without departing from the scope of the present invention. Therefore, the scope of the present invention is not limited to the disclosed embodiment, and it should be defined by the scope of the following claims and equivalents thereof.

## Claims

1. A video editing apparatus for guiding video feature information, the video editing apparatus comprising:
a feature information determiner for determining video sections comprising at least one video feature information in video data;
a time information detector for detecting time information corresponding to the determined video sections;
a display unit for displaying the video data; and
a controller for controlling the feature information determiner to determine the video sections comprising the video feature information in response to a video editing request, the time information detector to detect the time information corresponding to the determined video sections, and displaying information about the determined video sections on the display unit by using the detected time information.

2. The video editing apparatus of claim 1, wherein the feature information determiner detects, in each video frame of the video data, the at least one video feature information and determines video frames in which the at least one video feature information is present as the video sections.

3. The video editing apparatus of claim 1, wherein the video feature information comprises at least one of a face, a facial expression, a voice, and a scene change.

4. The video editing apparatus of claim 1, wherein the controller displays information about the determined video sections in a timeline corresponding to the at least one video feature information through the display unit.

5. The video editing apparatus of claim 4, wherein the controller marks the information about the determined video sections for different feature information with different colors.

6. The video editing apparatus of claim 5, wherein the controller marks the information about the determined video sections for single feature information with a plurality of colors.

7. A video editing method for guiding video feature information in a video editing apparatus, the video editing method comprising:
determining video sections comprising at least one video feature information in video data in response to a video editing request;
detecting time information corresponding to the determined video sections;
displaying the video data; and
displaying information about the determined video sections on a display unit by using the detected time information.

8. The video editing method of claim 7, wherein determining the video sections comprises:
detecting, in each video frame of the video data, the at least one video feature information; and
determining video frames in which the at least one video feature information is present as the video sections.

9. The video editing method of claim 7, wherein the video feature information comprises at least one of a face, a facial expression, a voice, and a scene change.

10. The video editing method of claim 7, wherein displaying the information about the video sections comprises displaying information about the determined video sections in a timeline corresponding to the at least one feature information through the display unit.

11. The video editing method of claim 10, wherein displaying the information about the video sections comprises marking the information about the determined video sections for different feature information with different colors.

12. The video editing method of claim 11, wherein marking the information with the different colors comprises marking the information about the determined video sections for single feature information with a plurality of colors.
